# EUROPEAN PATENT SPECIFICATION

(11) **EP 0 366 829 B1**
(45) Date of publication and mention of the grant of the patent: **05.06.1996**
(21) Application number: 88118420.4
(22) Date of filing: 04.11.1988
(51) Int. Cl.: F02K 1/60, F02K 1/11

(54) **Jet-engine thrust-reversers**
Schubumkehrvorrichtung für Strahltriebwerke
Inverseur de poussée pour moteur à réaction

(43) Date of publication of application: 09.05.1990
(73) Proprietor: The Dee Howard Co., San Antonio Texas 78217 (US)
(72) Inventor: Fage, Etienne, F-83350 Ramatuelle (FR); Lair, Jean-Pierre, F-3130 Plaisance (FR)
(74) Representative: McCallum, William Potter

(56) References cited:
- FR-A- 2 382 593
- FR-A- 2 500 537
- FR-A- 2 614 939
- US-A- 2 481 330
- US-A- 2 735 264
- US-A- 4 093 122
- US-A- 4 194 692

## Description

This invention relates to jet-engine thrust-reversers of the kind in which one or more doors that are movable from a stowed condition to a deployed condition for thrust reversal of the engine, define a nozzle extension for the engine in their stowed condition.

A jet-engine thrust-reverser of this specified kind is known from French Patent Specification No 2,382,594 in which doors of the reverser when stowed provide a nozzle extension in the form of a sleeve having an interior volume that defines the final portion of the engine nozzle including the throat. Since this sleeve serves as part of the engine nozzle, the nozzle proper can be shorter than would otherwise be necessary. This allows the overall length of the engine as fitted with the thrust reverser, to be reduced, with consequent saving in weight.

It is an object of the present invention to provide a jet-engine thrust-reverser of the kind specified that offers further advantage.

According to the present invention, a jet-engine thrust-reverser of the kind specified is characterised in that the one or more doors are displaceable while remaining in the stowed condition, for varying the cross-section of the nozzle extension.

With the present invention, the doors, while remaining stowed, may be actuated in such a way that the throat area of the engine's nozzle is varied, thereby allowing the engine thrust to be optimized to suit a plurality of engine operating regimes. For example, in an aircraft application, the geometry of the nozzle can be selectively adjustable between the optimum for take-off of the aircraft, and the optimum for cruise conditions.

It is thus possible to vary, by means of the thrust reverser, the area of the throat of the ejection nozzle for the gas jet of an engine, while the doors are stowed, and when a direct jet is being output from the engine. As a consequence, by control of the reverser doors in their stowed condition or position, one can better vary the throat area of the nozzle to correspond, for example, to the particular phase of flight of an aircraft.

The optimal throat area of the jet ejection nozzle of an aircraft during take-off is different from that for cruise flight. The difference is all the more important in that the ambient temperature of the engine during take-off is high, the engine thereby often attaining its temperature limit and thus being required to be limited in its turbine rotation speed, so that its thrust must necessarily be reduced. When the engine is provided with a fixed nozzle, the engine operates with a fixed throat area whose cross-section corresponds to a compromise between the two optimal cross-sections for take-off and cruise flight. When such a compromise is not acceptable, a variable throat area, for example of the "petal" type, is used. However, this type of variable nozzle has numerous mechanical complications, which also increases the engine's weight.

In the present invention, a geometric variation of the throat area of the nozzle, by using essentially the components already in existence on a turbo-jet engine provided with a thrust reverser, can be obtained simply, thereby enabling the engine to function as closely as possible to the ideal conditions. Thus, the present invention makes possible the transformation of the drawbacks of a thrust reverser into an advantage.

It is known from U.S. Patent Specification Nos 4,093,122 and 4,194,692 to construct an aircraft jet engine with thrust reverser doors which are pivotable about fore and aft pivotal axes. In both of these known arrangements, however, the thrust reverser doors do not, in any of their controllable conditions or positions, define the minimum cross-sectional area or throat of the engine's ejection nozzle. For both cases, the minimum cross-sectional area is defined by a separate, variably convergent nozzle, with the thrust reverser doors being configured to provide, in the flight regime, a divergent nozzle.

The present invention is characterised in that in the stowed condition the doors define at least a portion of the throat of the ejection nozzle of the engine and displacement of the doors in the stowed condition between first and second limiting positions varies the cross-sectional area of the throat of the ejection nozzle between respective minimum and maximum values.

With the thrust reverser of the present invention, the throat area of the nozzle can have a plurality of discrete values. Nevertheless, in a simple method and advantageous embodiment of the present invention, the doors, while remaining in the stowed position or condition, may be displaced angularly about downstream transverse axes between two pre-set, stable positions. One of the positions may, for example, provide a throat opening of the nozzle appropriate for aircraft take-off, while the other provides a throat opening of the nozzle appropriate to cruise flight.

The thrust reverser of the present invention may incorporate selectively-actuable means for displacing the doors in their stowed condition, which is separate from selectively-actuable means for moving them to their deployed condition; on the other hand, the two functions may be incorporated in the one means. The door-displacing means may be coupled to the doors by rods or other links which exert turning moments on the doors in dependence on the actuation of the displacing means. Such links may be such as to vary in length in dependence upon whether the doors are locked in the stowed condition.

Displacement of the doors to vary the cross-section of the nozzle extension while they are in the stowed condition, may be effected by displacing pivot axes of the doors. Such axes may be carried by eccentric members, for example, pivotable discs or other members which are pivoted about axes spaced from the pivot axes of the doors, and in these circumstances displacement of the doors in the stowed condition may be effected by angular displacement of the said members about their pivot axes. On the other hand, the pivot axes of the doors may be constrained to movement along arcuate paths defined in the reverser, displacement of the doors in the stowed condition then being effected by moving the pivot axes along said paths.

Locking means for restraining displacement of the doors transversely of the nozzle axis while the doors are stowed, may be located towards the fore end of the nozzle extension and be such as to enable movement of the doors longitudinally of the nozzle axis during displacement of the doors while in the stowed condition.

A jet-engine thrust-reverser in accordance with the present invention will now be described, by way of example, with reference to the accompanying drawings, in which:
Figures 1 is a schematic view of part of the nozzle of an aircraft turbo-jet engine equipped with a thrust reverser according to the present invention, when the thrust-reverser doors are stowed;
Figure 2 is a schematic view corresponding to that of Figure 1 but showing the thrust reverser in the condition for which the doors remain stowed but displaced to increase the throat area of the nozzle;
Figure 3 is a schematic view corresponding to that of Figure 1 but showing the thrust reverser with the doors deployed to effect thrust reversal;
Figure 4 illustrates the construction of a part of the thrust reverser of Figures 1 to 3 which is involved in effecting displacement of the stowed doors to change the throat area of the nozzle;
Figures 5 and 6 are cross-sectional views taken on the lines V-V and VI-VI, respectively, of Figure 4.
Figures 7 and 8 are schematic representations of the arrangement of Figure 4 to 6 for illustrating operation of that arrangement in changing the throat area of the nozzle, and deploying the doors, respectively;
Figures 9 and 10 illustrate details of an alternative arrangement to that of Figure 4, the section of Figure 10 being taken on the line X-X of Figure 9;
Figure 11 to 14 illustrate a further alternative arrangement to that of Figure 4, the sections of Figure 12, 13 and 14 being taken on the lines XII-XII, XIII-XIII and XIV-XIV, respectively, of Figure 11;
Figures 15 and 16 are schematic representations of the arrangement of Figures 11 to 14 for illustrating operation of that arrangement in changing the throat area of the nozzle, and deploying the doors, respectively;
Figures 17 to 19 illustrate a modification of the arrangement of Figures 11 to 14, the sections of Figures 18 and 19 being taken on the lines XVIII-XVIII and XIX-XIX, respectively, of Figure 17; and
Figures 20 to 24 illustrate further alternative arrangements for displacing the thrust-reverser doors while they are stowed, to vary the nozzle throat cross-section.

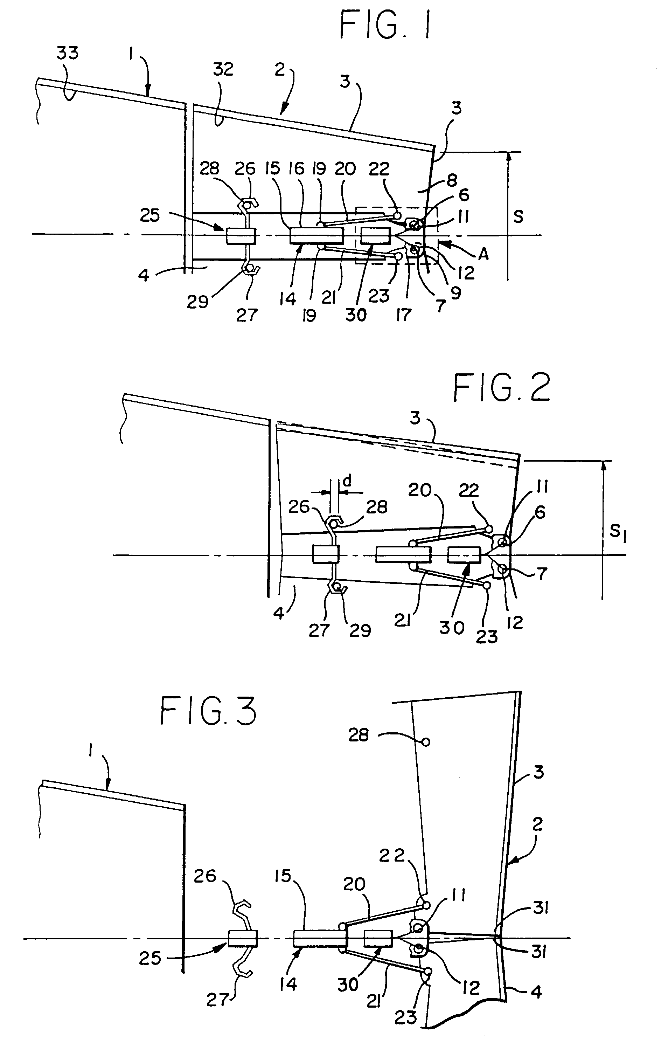

Referring to Figures 1 to 3, an ejection nozzle 1 of a jet engine of a single or double flow type, is equipped with a thrust reverser 2. The thrust reverser 2 has two identical doors 3 and 4 (door 4 is shown partially in Figure 3 only) which form part of the nozzle 1 - for the reasons previously discussed - when they are in their stowed position or condition (Figures 1 and 2). When they are in their deployed or extended condition (Figure 3), the doors 3 and 4 actively participate in braking the aircraft since they then act to reverse the force of the jet delivered by the engine.

Doors 3 and 4 are mounted pivotally on axes 6 and 7, respectively, that extend transversely of the jet of the engine, and are located downstream of the ejection nozzle 1. In this respect, the two doors 3 and 4 are coupled to identical pairs of hinged braces 8 and 9, respectively. The door 3 is supported by the two braces 8 on respective downstream spindles or shafts 11 that lie along the axis 6 and the door 4 is supported by the two braces 9 on respective downstream spindles or shafts 12 that lie along the axis 7.

Actuating means 14 (represented schematically in Figures 1 to 3) operate the doors 3 and 4 simultaneously to adopt their stowed position or their deployed position, and may be, for example, as described in French Patent Specification No 2,500,537. Briefly, the means 14 include an actuator such as a jack 15, which is connected by its stationary part 16 to rigid arms 17 that are fixedly coupled to the fixed nozzle 1; the active, displaceable part of the actuator, comprises two actuating flanges 19 to which respective ones of two rigid rods 20 and 21 are connected. The rods 20 and 21 extend from the flanges 19 to be connected at their other ends to the braces 8 and 9 of the two doors 3 and 4. Thus, rod 20 is connected at 22 to brace 8 of door 3, and rod 21 is connected at 23 to brace 9 of door 4.

Control locking means 25 (represented schematically), which are for locking and maintaining the doors 3 and 4 of the thrust reverser 2 in their stowed position, are located upstream of the doors; such means may be, for example, as described in French Patent Specification No 2,500,537. In this respect, and as is clear from Figures 1 and 2, hooks 26 and 27, disposed diametrically opposed to each other, retain or lock upstream fingers 28 and 29 of the doors 3 and 4. Hook 26 locks to the finger 28 of door 3, whereas hook 27 locks to the finger 29 of door 4.

In accordance with the present invention, the thrust reverser also includes means 30 (represented schematically) for displacing the shafts 11 and 12 radially of the engine jet, while the doors 3 and 4 are in the stowed or folded position and locked by the locking means 25. Such displacement modifies the throat area of the nozzle. Examples of various specific constructions of the means 30 for achieving such displacement and throat-area modification, are described below, but the operating principle will first be described with reference to Figures 1 to 3.

Figure 1 shows the doors 3 and 4 of the thrust reverser 2 in a stowed position and both locked, via the fingers 28 and 29, by the hooks 26 and 27 of the locking means 25. The internal passage 32 of the thrust reverser is in this position of the doors 3 and 4, an extension of the substantially identically conical convergent duct 33 of nozzle 1. The throat of the nozzle has a well-defined cross-section S, which is best adapted to a specific flight phase of an aircraft (a phase such as, for example, take-off or cruising).

The change from the configuration of Figure 1 to that of Figure 2, with corresponding change or modification of the throat cross-section of the nozzle, is effected under actuation of the displacement means 30, while the hooks 26 and 27 of the locking means 25 lock the fingers 28 and 29 of doors 3 and 4. The displacement means 30 displace the shafts 11 and 12 simultaneously downstream along curved trajectories of opposite sense, relative to the fixed arms 17. The doors 3 and 4 are, as a result, swung open a limited amount only, at the aft end, while the fingers 28 and 29 are displaced a distance "d" within the hooks 26 and 27 at the fore end. Hinge spindles 22 and 23 of rods 20 and 21 equally undergo displacement, the movable part of actuator jack 15, to which these rods are connected, relocating with respect to the stationary portion of the jack to allow this. The throat of nozzle 1 is thus changed to have a cross-section S1 which is larger than the initial cross-section S (Figure 1), and which is thus better adapted to one of the other phases of aircraft flight; the initial position occupied by door 3 is represented in dotted line in Figure 2.

The invention accordingly enables the throat cross-section of the nozzle to be modified, and thereby to be adapted as required to changed phases or conditions of engine operation during different phases (for example, take-off and cruising) of flight.

Figure 3 shows the condition in which the thrust reverser is fully operative with the doors 3 and 4 extended or deployed. In order to obtain this position, the control locking means 25 is unlocked to free the fingers 28 and 29 of the doors, and the actuating means 14 is activated so that the rods 20 and 21, connected to the movable part of jack 15, react with the doors 3 and 4 via the hinge spindles 22 and 23. The doors 3 and 4 pivot simultaneously about the stationary shafts 11 and 12, and activation of the actuating means 14 is continued until the desired, fully-deployed condition is attained; in this condition the trailing edges 31 of the doors 3 and 4 abut one another.

The jack of actuating means 14 maintains the doors 3 and 4 in the fully-deployed position during the braking phase of the aircraft. The return of the doors from this position to the folded position is effected by reversing the hydraulic pressure in jack 15, which then draws the doors in, rotating them around their respective pivots by means of the rigid rods 20 and 21. When the fingers 28 and 29 come into contact with the hooks 26 and 27, respectively, the hooks 26 and 27 swing round to lock onto them and hold them fast.

The extended position of the doors 3 and 4 can be attained irrespective of whether deployment starts from the position illustrated in Figure 1, or that illustrated in Figure 2.

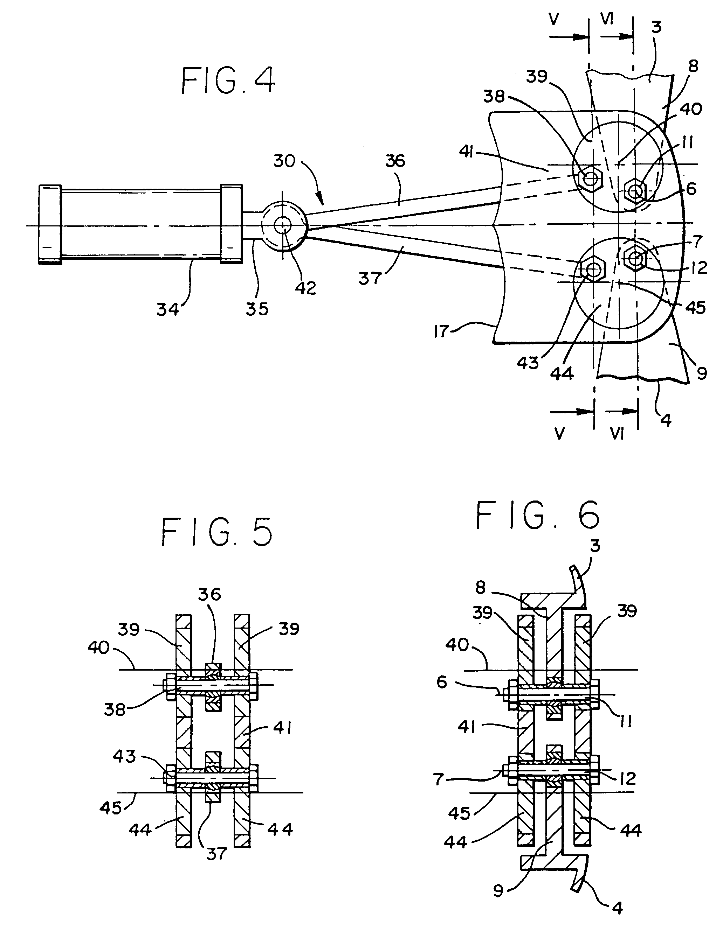

The displacement means 30 may take the form that is now to be described with reference to Figures 4 to 6. In this respect, Figure 4 corresponds to the zone of Figure 1 that is delineated by broken lines and referenced "A".

Referring to Figures 4 to 6, the displacement means 30 in this case is activated by an auxiliary jack 34 carried on the fixed arms 17 that extend from fixed nozzle 1. The slidable rod 35 of jack 34 carries two auxiliary rods 36 and 37 which are identical to one another and which are pivoted to the rod 35 on a common pivot axis 42. The auxiliary rod 36 is hinged to a spindle 38 that is inserted into discs or plates 39 which are pivotally mounted about a common axis of rotation 40 on a flange 41 that is mounted on fixed arm 17. The spindle 38 is located off-centre with respect to the rotational axis 40 of the plates 39.

The auxiliary rod 37 is likewise, but symmetrically with respect to the axis of the nozzle 1, hinged to a spindle 43 inserted into discs or plates 44 that are pivotally mounted about a common rotational axis 45 on the flange 41. The axis 43 is located off-centre with respect to the rotational axis 45 of the discs or plates 44.

As shown in Figures 4 and 5, the discs or plates 39 and 44 are related respectively to the downstream transverse axes 6 and 7. In this respect, the transverse shafts 11 and 12, which respectively carry the braces 8 and 9 of the doors 3 and 4, are secured to the discs or plates 39 and 44 respectively. Shaft 11 is located on the plate 39 off-centre with respect to the rotational axis 40 of plate 39, and shaft 12 is similarly located on the plate 44 off-centre with respect to the rotational axis 45 of plate 44.

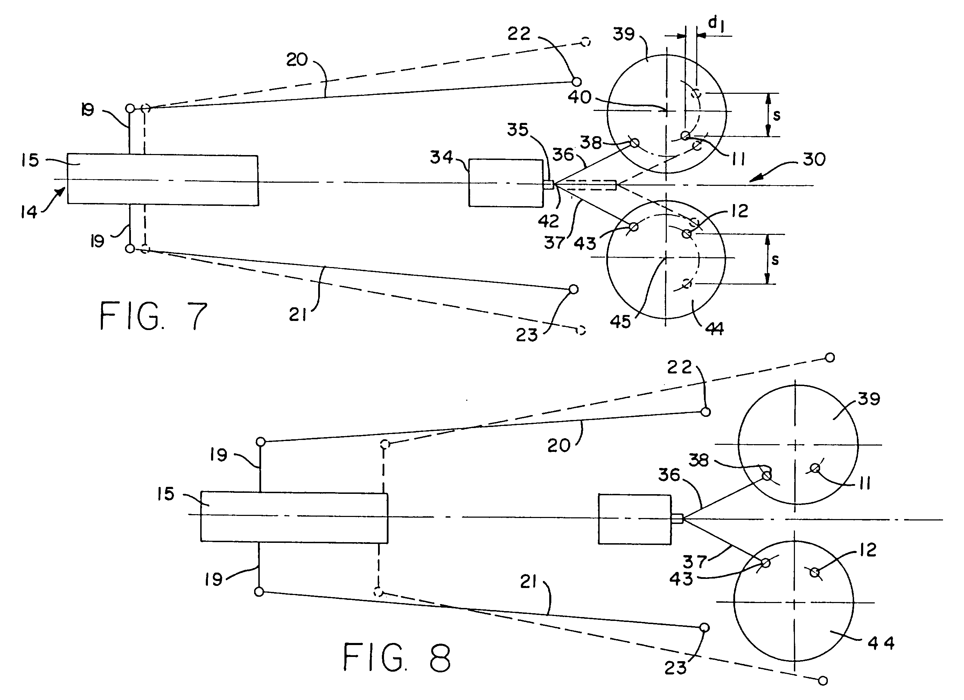

The operation of the displacement means 30 in this case, will be described with reference to Figure 7 which illustrates schematically the situation corresponding to the minimal cross-section S of the throat of the nozzle (in continuous line), and also (in broken line) the situation corresponding to the maximum cross-section S1 of the throat of the nozzle.

Referring to Figure 7, the condition shown in continuous line is that applicable to the doors 3 and 4 being in their stowed or folded position (locked in this position by engagement of the hooks 26 and 27 with the upstream fingers 28 and 29 of the doors) and providing the minimal cross-section S of the throat of the nozzle 1. As shown, the actuating flanges 19 of the jack 15 are in their retracted position in this condition. The disposition of the downstream shafts 11 and 12 at this time effects an automatic locking to provide that hydraulic or pneumatic pressure is not required in the auxiliary jack 34 in order to maintain this minimal cross-section S for the throat of the nozzle 1.

Pressurization of the jack 34 in this condition, extends the rod 35 to push on the auxiliary rods 36 and 37 and, via the spindles 38 and 39, cause the discs or plates 39 and 44 to turn in opposite senses about their respective axes 40 and 45. The extent of rotation of the plates 39 and 44 is mechanically limited by stops (not shown) which prevent them advancing beyond preselected extreme positions.

The turning of the plates 39 and 44 angularly displaces the spindles or shafts 11 and 12, with the result that the doors 3 and 4, attached respectively to the shafts 11 and 12 by the braces 8 and 9, are displaced to a position for which the throat of the nozzle has the cross-section S1. This position is then maintained by the pressure applied by the auxiliary jack 34. The transverse displacement, s, of each shaft 11 and 12 with respect to the nozzle axis, indicates the increase of nozzle throat-radius resulting from actuation of the jack 34.

As indicated in dashed line in Figure 7, the rods 20 and 21 of the actuating means 14 also undergo displacement in consequence of actuation of the jack 34. More especially, the hinge spindles 22 and 23 attaching the rods 20 and 21 respectively to the braces 8 and 9, are displaced with the doors 3 and 4. The consequent displacements of the rods 20 and 21 cause displacement of the flanges 19 which are free to move since the actuating means 14 is not at this time pressurized.

The displacement, d1, of the shafts 11 and 12 axially of the thrust reverser in changing the door disposition from that of minimum throat cross-section S, to that of increased cross-section S1, represents the backward movement of doors 3 and 4 that accompanies that change. The upstream locking fingers 28 and 29 are displaced a corresponding amount (illustrated in Figure 2 as displacement d) within their respective hooks 26 and 27. The hooks 26 and 27 are of a configuration that allows for such displacement while maintaining locking of the fingers.

Change back from the maximum cross-section S1 to the minimum cross-section S of the throat of the nozzle, simply involves reducing the actuating pressure within the auxiliary jack 34. Rod 35 then retracts, either by means of an internal spring or fluid feed within the jack, and this imparts rotation to the discs or plates 39 and 44, by virtue of the accompanying retraction of the rods 36 and 37. The rotation of the plates 39 and 44 about their respective axes 40 and 45, return the shafts 11 and 12 to their initial disposition corresponding to the minimum cross-section S of the throat of the nozzle.

Operation of the thrust reverser for change from the stowed condition illustrated in Figure 7, to the condition for deployment of the doors 3 and 4 to provide braking of the aircraft, will now be described with additional reference to Figure 8. In this regard, the fingers 28 and 29 are freed from the hooks 26 and 27, and actuating pressure is applied to the principal actuating jack 15. The consequent drive applied to the rods 20 and 21 acts via the hinge spindles 22 and 23, to turn the doors 3 and 4 about their respective fixed downstream shafts 11 and 12, until the trailing edges 31 of the doors come into contact with each other. The rods 20 and 21 now occupy the positions shown in dashed line in Figure 8, with the doors 3 and 4 fully deployed as required, to redirect the jet delivered downstream from the nozzle 1 by the engine.

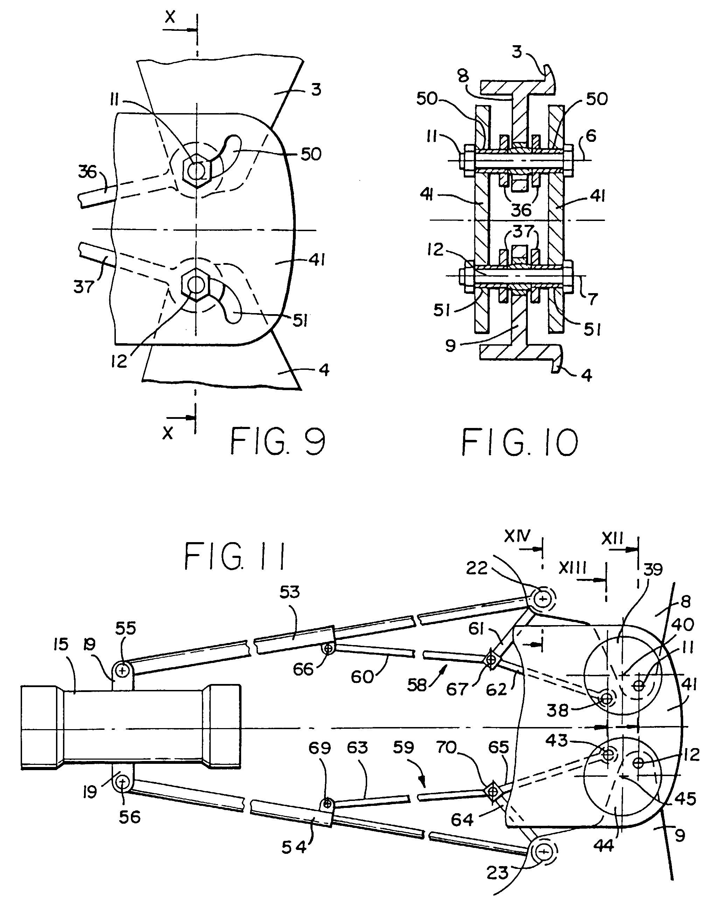

The alternative construction of the displacement means 30 illustrated in part in Figures 9 and 10, involves an auxiliary jack corresponding to the jack 34 of Figure 4. Such jack (not shown) is coupled to rods 36 and 37 that are attached directly to shafts 11 and 12. As shown more especially in Figure 10, the brace 8 of the door 3 is carried centrally of the shaft 11 with end portions of the auxiliary rod 36 on either side, and with each end of the shaft 11 engaged within an arcuate slot 50 of flange 41. Also, the brace 9 of the door 4 is carried centrally of the shaft 12 with end portions of the auxiiiary rod 37 on either side, and with each end of the shaft 12 engaged within an arcuate slot 51 of the flange 41. The flange 41 is mounted on arm 17 fixed with respect to the nozzle 1, and as is clear from Figure 9, the arcuate slots 50 and 51 are symmetrically related to one another with respect to the axis of the nozzle.

The dispositions of the shafts 11 and 12 illustrated in Figure 9, in which they lie at one extreme of their respective slots 50 and 51, are those adopted when the throat of the nozzle is of a minimum area. In order to change from the minimum cross-section area to the maximum cross-section area, the auxiliary jack (34) is pressurized such that the rods 36 and 37 acting directly on the shafts 11 and 12, cause them to move round the arcuate slots 50 and 51. When the shafts 11 and 12 reach, and are stopped against, the opposite extremes of the slots 50 and 51, the throat of the nozzle has been increased to the maximum cross-section S1. Retention of this condition is maintained by the jack (34).

As before, the fingers 28 and 29 undergo displacement with respect to the hooks 26 and 27, respectively, but locking by those hooks is maintained.

Change from the stowed to deployed position of the doors 3 and 4 is effected in essentially the same way as described with reference to the arrangement of Figures 4 to 6, in that the doors 3 and 4 are pivoted about the shafts 11 and 12 which in this case remain fixed under the action of the auxiliary rods 36 and 37.

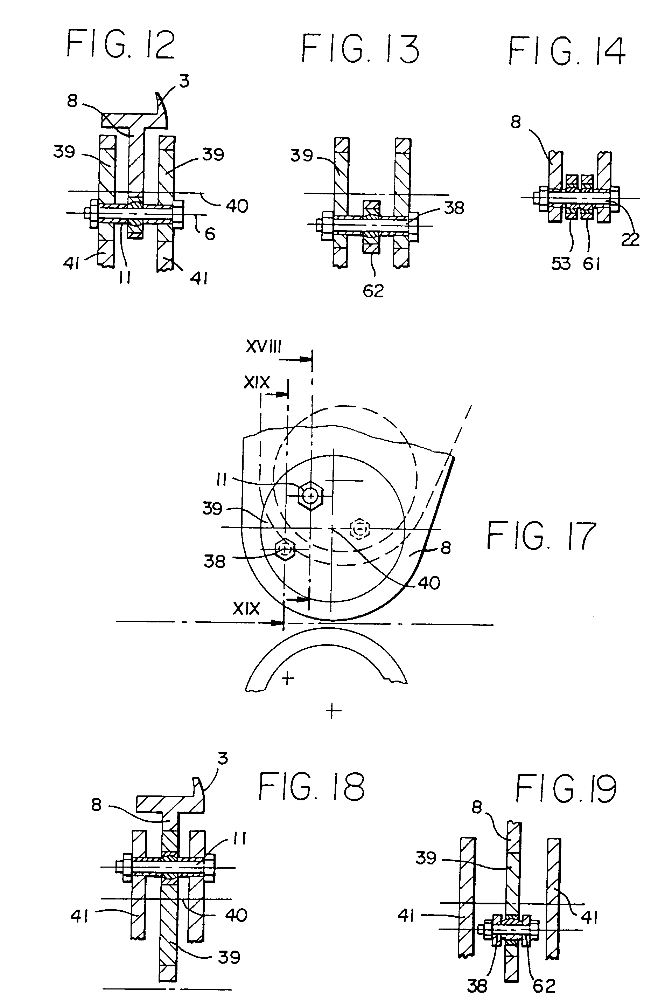

The displacement means 30 for permitting the opening of the throat of the nozzle while the doors 3 and 4 of the thrust reverser 2 remain stowed, can be controlled directly by the actuating jack 15 of the actuating means 14, that is to say, by the same means as used for changing the doors from the folded to the deployed position and vice-versa. Such an arrangement will now be described with reference to Figure 11 to 14.

Referring to Figure 11 especially, the two flanges 19 of the fixedly-mounted jack 15 of the actuating means 14 in this case, are coupled via hinge or pivot spindles 55 and 56 to two rods 53 and 54 respectively. The rods 53 and 54, which are connected at their opposite to ends to the braces 8 and 9 respectively, by way of hinge spindles 22 and 23, are each of a telescopic form that includes, for example, an internal spring and allows the rod to vary in overall length.

The displacement means of the doors 3 and 4 comprise respective connecting rod assemblies 58 and 59 each of which is associated with an assembly of discs or plates 39 and 44 corresponding to those (with the same references) featured in the arrangement of Figures 4 to 6.

Each connecting rod assembly 58 and 59 comprises three small rods 60, 61, 62 and 63, 64, 65 respectively. The rod 60 is pivoted at one end to a lug 66 on the rod 53, and one end of the rod 61 is coupled to the hinge spindle 22 so as also to attach it to the rod 53 (Figure 14). The rod 62, on the other hand, is coupled to the spindle 38 on the pivotally-mounted plates 39 (Figure 13) and off-centre with respect to the rotational axis 40 of the plates 39 (Figure 12). The other ends of the rods 60, 61 and 62 are pivoted together on a common pivot axis 67.

Rod assembly 59 is of the same construction as the rod assembly 58, and in this respect, the rod 63 is pivoted to a lug 69 on the rod 54, the rod 64 is coupled to the hinge spindle 23, and the rod 65 is coupled to the spindle 43 on the pivotally-mounted plates 44 off-centre with respect to the rotational axis 45 of the plates 44 . The other ends of the rods 63, 64 and 65 are pivoted together on a common pivot axis 70.

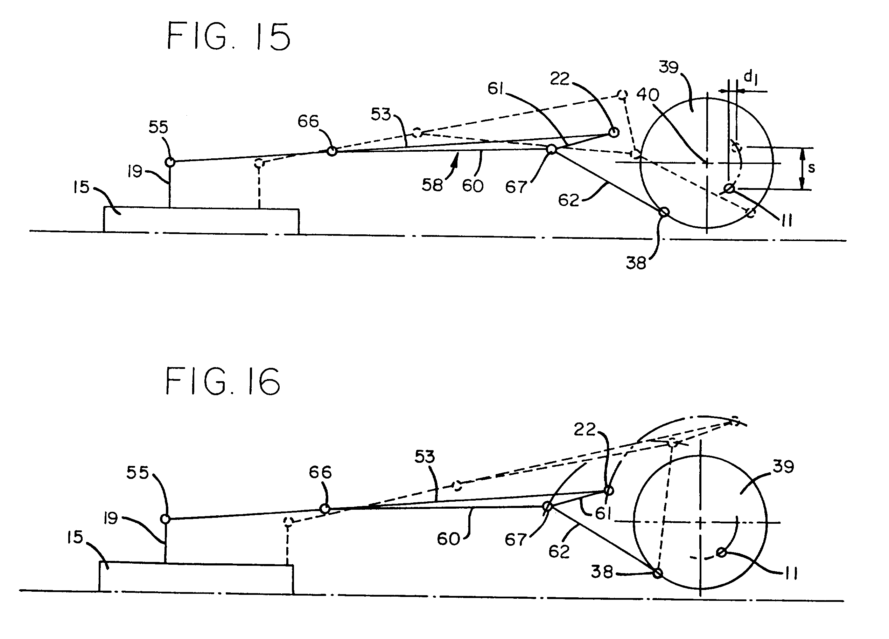

Operation of the arrangement for varying the cross-section of the nozzle orifice will now be described with reference to Figure 15, which illustrates schematically, in half view, the situation corresponding to the minimal cross-section S of the throat of the nozzle (in continuous line), and also (in broken line) the situation corresponding to the maximum cross-section S1 of the throat of the nozzle.

Referring to Figure 15, the condition shown in continuous line is that in which the spring rods 53 and 54 are at their maximum length, jack 15 being inactive so that the upstream fingers 28 and 29 of the doors 3 and 4 are locked by the hooks 26 and 27. To change from this position, in which the throat is of minimum cross-section, to one in which the throat is increased to its maximum cross-section, jack 15 is pressurized while the upstream fingers 27 and 28 remain securely locked. Activation of the jack 15 in this way compresses each of the telescopic rods 53 and 54 against its in-built spring (or other source of resilience), to its minimum length as shown in broken line in Figure 15. The compression causes the rods 61 and 64 to pivot about the common axes 67 and 70 towards the rods 60 and 63 respectively, with the result that the rods 62 and 65 cause the discs or plates 39 and 44 to turn, in opposite senses, about their axes 40 and 45. This turning displaces the shafts 11 and 12 angularly about the axes 40 and 45 until the shafts 11 and 12 are brought up to mechanical stops (not shown) and the doors 3 and 4 have then reached the position for maximum throat cross-section S1. The linear displacement transverse to the jet axis, s, experienced by each shaft 11 and 12 in the angular displacement, corresponds to the increase of throat-radius of the nozzle.

As for the arrangement illustrated in Figure 7, the change from one stowed position to the other of the doors 3 and 4, is accompanied by a longitudinal backward movement of the fingers 28 and 29 with respect to the hooks 26 and 27.

The doors 3 and 4 are returned from the maximum throat cross-section (corresponding to the condition represented in broken lines) to the minimum throat cross-section (corresponding to the condition represented in continuous lines), by relieving the force delivered by the jack 15. The compression of the internal spring (or other resilience) of each telescopic rod 53 and 54 relaxes, and the rod extends to its initial, maximum length. As they extend, the rods 53 and 54 act through their respective rod assemblies 58 and 59 to impart rotational movement to the plates 39 and 44, returning the shafts 11 and 12 to their initial dispositions for minimal throat cross-section S.

Operation of the thrust reverser for change from the stowed condition illustrated in Figure 15, to the condition for deployment of the doors 3 and 4 to provide braking of the aircraft, will now be described with additional reference to Figure 16. In this regard, the fingers 28 and 29 are freed from the hooks 26 and 27, and the jack 15 is then pressurized. Since the doors 3 and 4 are no longer locked, the telescopic rods 53 and 54 do not compress, and thus, working jointly like rigid rods, remain at maximum length. The doors 3 and 4 accordingly pivot around the shafts 11 and 12, until the trailing edges 31 come into contact with one another, the rod assemblies 18 and 19 playing a substantially passive role throughout.

The plates 39 and 44 may stay fixed or turn, so that pivoting of the doors 3 and 4 into the reverse-thrust position may begin from either of the two stowed positions in which, respectively, the throat of the nozzle has its minimum and maximum cross-section S and S1.

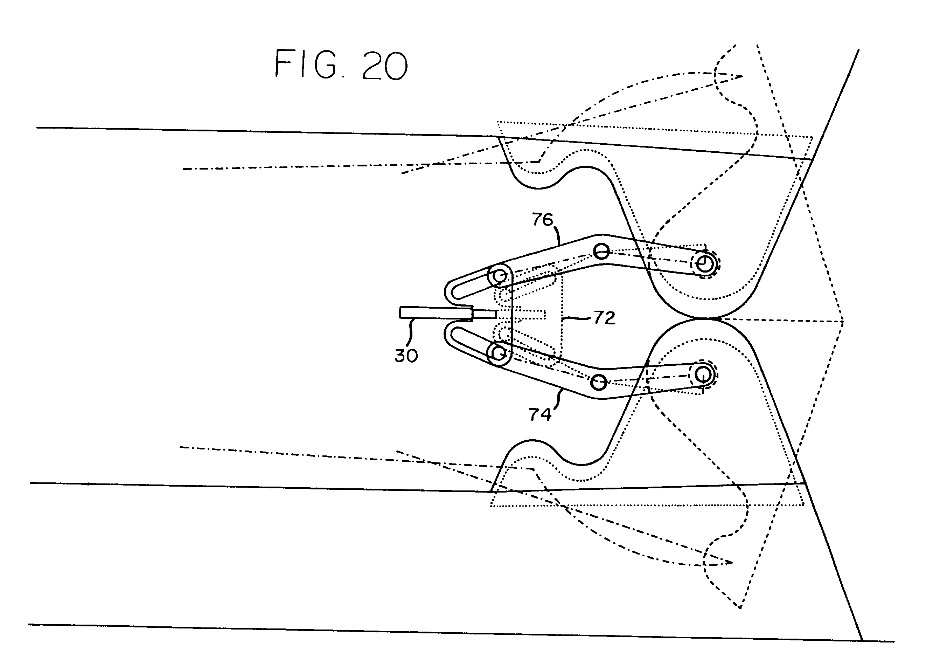

In a modification of the arrangement of Figure 11, illustrated in Figures 17 to 19, the discs or plates 39 and 44 are pivotally mounted directly onto the braces 8 and 9, respectively. As shown especially in Figure 18, which illustrates the coupling of the brace 8 to the flange 41 via the shaft 11 (the coupling of brace 9 is identical and symmetrical with respect to the axis of the nozzle), plate 39 is disposed directly in brace 8. The rod 62 of the rod assembly 58 is coupled to the spindle 38 in the plate 39, and the spring rod 53 is attached to the brace 8 as before.

The operation is similar to that described with respect to Figures 15 and 16 and, as a result, will not be described further. The position occupied by the plate 39 connected to the brace 8, when the throat of the nozzle has been changed from the minimum to maximum cross-section, is shown in broken line in Figure 17.

Further arrangements for achieving variation of the cross-section of the exit opening, in accordance with the present invention, are shown in Figures 20 to 24.

With reference to Figure 20, a slotted plate 72 is in this case directly coupled to the actuating rod or arm of the actuating jack 30. Extension arms 74 and 76 that engage with the slotted plate 72 provide coupling to the braces on the doors, such that activation of the jack 30 to impart force on the plate 72, brings about variation in the cross-sectional area of the throat of the nozzle.

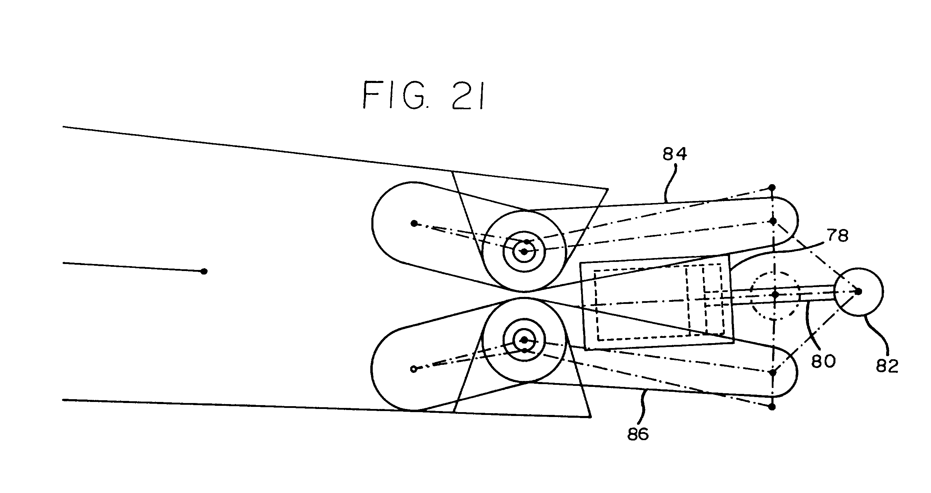

In the arrangement of Figure 21, the actuating means, namely jack 78, is positioned to the rear of (or away from) the thrust reverser doors such that the jet emitted from the engine does not directly hit the actuating arm 80 of the jack. In this embodiment, instead of pulling the thrust reverser doors, the actuating jack 78 pushes against a ring 82. The ring 82 is connected to the doors by means of two extending parts 84 and 86 that are mounted at the respective pivots of the doors such that displacement of them brings about variation of the cross-section of the nozzle throat.

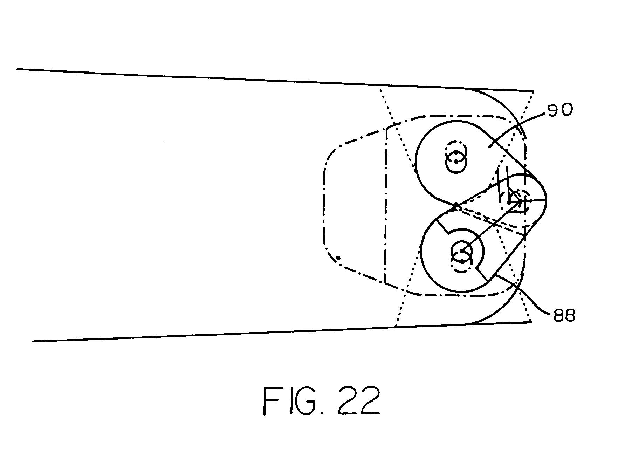

The arrangement of Figure 22 involves, in place of two separated extending arms, two overlapping or superposed arms 88 and 90. These arms are attached to the actuating rod or arm (not shown) of the actuation means, and are arranged to push against the thrust-reverser doors when force is exerted by that means, in such a way as to rotate the doors about their respective pivots and thereby vary the cross-section of the nozzle throat.

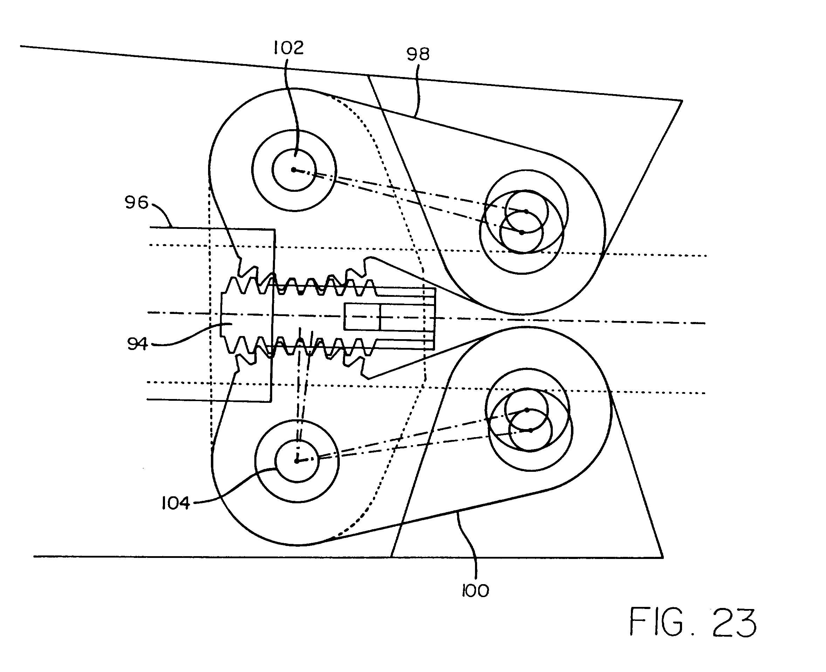

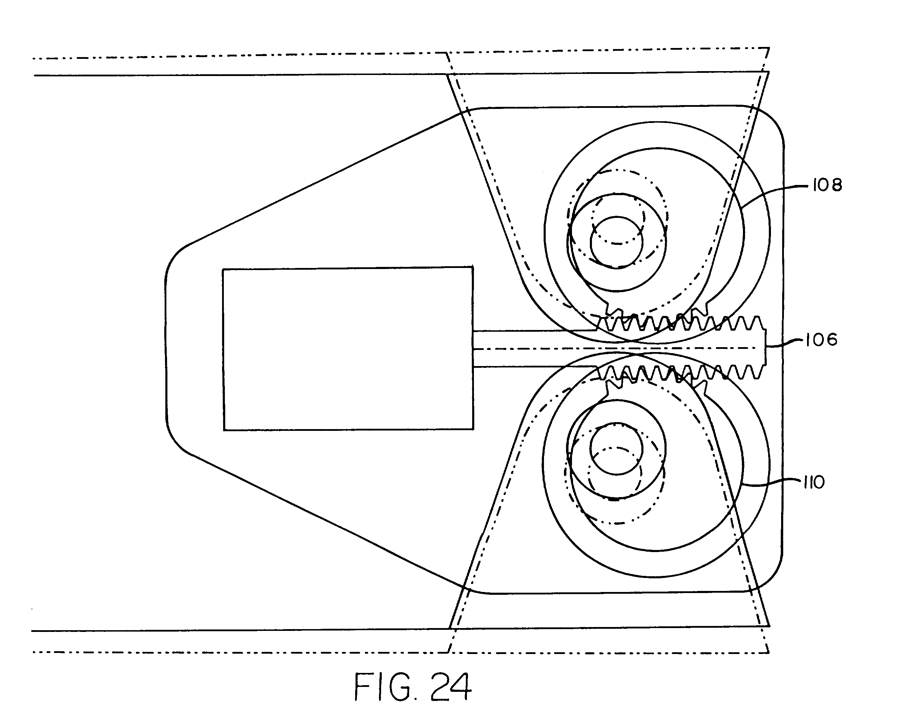

Instead of using hydraulic jacks for either pushing or pulling the thrust-reverser doors via some intermediary linkage or other means, drive mechanisms of other forms may be used. Examples of alternatives in this respect using drive gears, are illustrated in Figures 23 and 24.

Referring to Figure 23, a drive gear 94, which is rotated by actuating means 96, engages with the teeth of respective arms 90 and 100 coupled to the doors. Rotation of the gear 94 causes the arms 98 and 100 to pivot slowly about their respective pivot axles 102 and 104, so that the doors move correspondingly to vary the cross-sectional area of the nozzle throat.

The arrangement of Figure 24 involves a drive gear 106 for imparting rotational movements to two plates or rings 108 and 110 which are respectively coupled to the thrust-reverser doors. Thus, the cross-sectional area of the nozzle throat can be varied as desired by driving the gear 106.

## Claims

1. A jet-engine thrust-reverser of the kind in which one or more doors (3,4) that are movable from a stowed condition to a deployed condition for thrust reversal of the engine define a nozzle extension (32) for the engine in the stowed condition and are displaceable while remaining in the stowed condition; said one or more doors (3,4) being pivotally mounted for movement between the stowed and deployed conditions, the pivot axis (6,7) of each of said one or more doors (3,4) being located towards the downstream end of said one or more doors in the stowed condition; characterised in that in the stowed condition the one or more doors (3,4) define at least a portion of the throat of the ejection nozzle of the engine and displacement of the one or more doors (3,4) in the stowed condition between first and second limiting positions varies the cross-sectional area of the throat of said ejection nozzle between respective minimum and maximum values (S,S1);

2. A jet-engine thrust-reverser according to claim 1 further characterised in that the one or more doors (3,4) are displaceable between a plurality of discrete positions while in the stowed condition.

3. A jet-engine thrust-reverser according to claim 1 or claim 2 further characterised in that it includes a plurality of the said doors (3,4).

4. A jet-engine thrust reverser according to claim 3 further characterised in that selectively-actuable means (30) for displacing the doors (3,4) in their stowed condition is separate from selectively-actuable means (14) for moving them to their deployed condition.

5. A jet-engine thrust-reverser according to Claim 3 further characterised in that selectively-actuable means (15, Fig 11) for displacing the doors in their stowed condition is also selectively-actuable for moving them to their deployed condition.

6. A jet-engine thrust-reverser according to Claim 4 or Claim 5 further characterised in that the means for displacing the doors in their stowed condition is coupled to the doors (3,4) by links (36,37; 53,54; 74,76) and that the links exert turning moments on the doors (3,4) in dependence upon actuation of the displacing means (30; 15 Fig 11).

7. A jet-engine thrust-reverser according to Claim 6 further characterised in that the links (53,54) vary in length in dependence upon whether the doors (3,4) are locked in the stowed condition.

8. A jet-engine thrust-reverser according to any one of Claims 4 to 7 further characterised in that the selectively-actuable displacing means (30; 15 Fig 11) is coupled to each door (3,4) such that actuation of the displacing means displaces all the doors (3,4) simultaneously and to the same extent.

9. A jet-engine thrust-reverser according to any one of Claims 3 to 8 further characterised in that displacement of the doors (3,4) to vary the cross-section (S; S1) of the nozzle extension while they are in the stowed condition is effected by displacing the pivot axes (6,7) of the doors.

10. A jet-engine thrust-reverser according to Claim 9 further characterised in that the pivot axes (6,7) of the doors (3,4) are carried by pivotable members (39,44), that the pivot axes (40,45) of the said members (39,44) are spaced from the pivot axes (6,7) of the doors (3,4), and that displacement of the doors (3,4) in the stowed condition is effected by angular displacement of the said members (39,44) about their pivot axes (40,45).

11. A jet-engine thrust-reverser according to Claim 9 further characterised in that the pivot axes (6,7) of the doors (3,4) are constrained to movement along arcuate paths (50,51) defined in the reverser, and that displacement of the doors (3,4) in the stowed condition for varying the said cross-section, is effected by moving the pivot axes (6,7) along said paths (50,51).

12. A jet-engine thrust-reverser according to Claim 4 or Claim 5 further characterised in that the selectively-actuable means (96) for displacing the doors (3,4) in their stowed condition is coupled to the doors via gearing (94; 106).

13. A jet-engine thrust-reverser according to any one of Claims 3 to 12 further characterised in that the pivot axes (6,7) of the doors (3,4) are located aftwards within the nozzle extension.

14. A jet-engine thrust-reverser according to any one of Claims 3 to 13 further characterised in that locking means (25-27) for restraining displacement of the doors (3,4) transversely of the nozzle axis while the doors (3,4) are stowed, is located towards the fore end of the nozzle extension, and that the locking means (25-27) enables movement of the doors (3,4) longitudinally of the nozzle axis during displacement of the doors (3,4) while in the stowed condition.

15. The jet-engine thrust-reverser according to Claim 1 further comprising:
(a) thrust reverser actuator means (14) for operating the one or more doors (3,4) between the respective stowed and deployed conditions;
(b) means (25) for retaining the one or more doors (3,4) in the stowed condition;
(c) further actuator means (30) for selectively moving said one or more doors (3,4) while in the stowed condition between the first and second limiting positions; and
(d) means (26,27) enabling sufficient movement of said one or more doors (3,4) relative to the associated door retaining means (25) to permit actuation of said one or more doors (3,4) between the first and second limiting positions.

16. A jet-engine thrust-reverser according to Claim 15 in which said further actuator means (30) moves the aftmost portions of said one or more doors (3,4), while in the stowed inflight positions, away from and toward each other to thereby vary the cross-sectional area of the throat of the ejection nozzle of the engine.

17. A jet-engine thrust-reverser according to Claim 16 in which two doors (3,4) are provided and each door is rotationally supported on a pivot member (11,12) to thereby enable said doors to be pivoted between deployed thrust-reversing and stowed positions, and said further actuator means (30) move said pivot member (11,12) for each said door to thereby selectively move each said door away from and toward the opposing door at its aftmost end so as to respectively increase and decrease the cross-sectional area of the throat of said ejection nozzle formed by said doors.

18. A jet-engine thrust-reverser according to Claim 15 wherein said further actuator means (30) comprises:
an eccentric means (39,44) coupled to the doors (3,4) at corresponding pivot members (11,12) thereof;
at least one actuating arm (36,37) connected to each of the eccentric means (39,44) at a location off-centre to the corresponding pivot member (11,12) for imparting motion to the eccentric means (39,44);
whereby the eccentric means (39,44), when set to motion by the actuating arms (36,37), selectively move the doors (3,4) angularly about the corresponding pivot members (11,12).

19. A jet-engine thrust-reverser according to Claim 15, wherein said further actuator means (30) comprises:
a plate having a plurality of arcuate slots (50,51) each for providing guidance to the movement of a corresponding door (3,4) coupled therethrough to an actuating arm (36,37).

20. A jet-engine thrust-reverser according to Claim 15, wherein said further actuator means (30) comprises a hydraulic jack (34).

21. A jet-engine thrust-reverser according to Claim 15, wherein said thrust-reverser actuator means comprises a hydraulic jack (15).

22. A jet-engine thrust-reverser according to Claim 17, wherein said further actuator means (30) comprises at least one ring (39,44) pivotally mounted to rotate in a flange (41) connected to said engine, each ring (39,44) having positioned off-centre and parallel to its rotating axis on one side of a downstream transverse axis of said nozzle a spindle (38,43) about which a connecting rod (35,36,37) is moved under the action of a driving means (34) for changing, by rotation of said rod, the cross-sectional area of the throat of said ejection nozzle, when said doors (3,4) are in a stowed and retained position.

23. A jet-engine thrust-reverser according to Claim 19, wherein said plate (41) containing said arcuate slots (50,51) is connected to said engine the slots (50,51) being slidable about a downstream transverse axis of said nozzle by means of respective control rods (36,37) under the action of a driving means for changing the cross-sectional area of the throat of the ejection nozzle, while said doors (3,4) are in a stowed and retained position.

24. A jet-engine thrust-reverser according to Claim 21, wherein the jack (15) comprises:
a fixed portion (15) connected to said engine;
a mobile portion including flanges each of which is coupled to an end of respective rigid rods (53,54), the other end of each of the rigid rods (53,54) being connected to a corresponding one of the doors (3,4) in proximity to the portion of the doors (3,4) which form the downstream portion of said nozzle, each of said rigid rods (53,54) telescopically occupying either a minimum length or a maximum length, in dependence on the operation of said jack (15), with said doors (3,4) being retained in the stowed position.

25. A jet-engine thrust-reverser according to claim 24, wherein said further actuator means comprising:
two connecting rod assemblies (58,59) each including a plurality of rods (60,61,62 and 63,64,65) having respective first ends being coupled to an axle (67,70) and respective second ends being coupled to a telescopic rod (53,54), to a hinge spindle connected to said door (22,23), and to a ring (40,44) pivotally mounted to rotate in a flange (41) connected to said engine, said ring (40,44) having positioned off-centredly and in parallel to its rotating axis, on one side, said hinge spindle of the corresponding rod (38,43), and the other side, the corresponding thrust-reverser door (3,4).

26. A jet-engine thrust-reverser according to Claim 25, wherein said ring (40,44) of each of the assemblies is arranged in a respective downstream end of one of said doors (3,4).

## Patentansprüche

1. Schubumkehrvorrichtung für Strahltriebwerke in der Ausführung, bei der eine oder mehrere Klappen (3, 4), die aus einem Ruhezustand in einen Betriebszustand für die Schubumkehr des Triebwerkes beweglich sind, eine Düsenverlängerung (32) für das Triebwerk im Ruhezustand abgrenzen und verschiebbar sind, während sie im Ruhezustand verbleiben; wobei eine oder mehrere Klappen (3, 4) drehbar für eine Bewegung zwischen dem Ruhezustand und dem Betriebszustand montiert sind, und wobei die Drehachse (6, 7) der einen oder einer einer jeden der mehreren Klappen (3, 4) des in Strömungsrichtung gelegenen Endes der einen oder mehreren Klappen im Ruhezustand angeordnet ist; dadurch gekennzeichnet, daß die eine oder mehreren Klappen (3, 4) im Ruhezustand zumindestens einen Abschnitt der Verengung der Strahldüse des Triebwerkes begrenzen, und daß die Verschiebung der einen oder mehreren Klappen (3, 4) im Ruhezustand zwischen der ersten und der zweiten Grenzposition die Querschnittsfläche der Verengung der Strahldüse'zwischen den entsprechenden minimalen und maximalen Werten (S, S1) verändert.

2. Schubumkehrvorrichtung für Strahltriebwerke nach Anspruch 1, die außerdem dadurch gekennzeichnet ist, daß die eine oder mehrere Klappen (3, 4) zwischen einer Vielzahl von einzelnen Positionen verschiebbar sind, während sie im Ruhezustand sind.

3. Schubumkehrvorrichtung für Strahltriebwerke nach Anspruch 1 oder 2, die außerdem dadurch gekennzeichnet ist, daß sie eine Vielzahl der Klappen (3, 4) umfaßt.

4. Schubumkehrvorrichtung für Strahltriebwerke nach Anspruch 3, die außerdem dadurch gekennzeichnet ist, daß die selektiv zu betätigende Einrichtung (30) für das Verschieben der Klappen (3, 4) in ihrem Ruhezustand von der selektiv zu betätigenden Einrichtung (14) für deren Bewegung in ihren Betriebszustand getrennt ist.

5. Schubumkehrvorrichtung für Strahltriebwerke nach Anspruch 3, die außerdem dadurch gekennzeichnet ist, daß die selektiv zu betätigende Einrichtung (15, Fig. 11) für das Verschieben der Klappen in ihrem Ruhezustand ebenfalls selektiv für deren Bewegung in ihren Betriebszustand betätigt werden kann.

6. Schubumkehrvorrichtung für Strahltriebwerke nach Anspruch 4 oder 5, die außerdem dadurch gekennzeichnet ist, daß die Einrichtung für das Verschieben der Klappen in ihrem Ruhezustand mit den Klappen (3, 4) durch die Verbindungsglieder (36, 37; 53, 54; 74, 76) verbunden ist, und daß die Verbindungsglieder Drehmomente auf die Klappen (3, 4) in Abhängigkeit von der Betätigung der Verschiebungseinrichtung (30; 15, Fig. 11) ausüben.

7. Schubumkehrvorrichtung für Strahltriebwerke nach Anspruch 6, die außerdem dadurch gekennzeichnet ist, daß die Verbindungsglieder (53, 54) in ihrer Länge in Abhängigkeit davon variieren, ob die Klappen (3, 4) im Ruhezustand verriegelt sind.

8. Schubumkehrvorrichtung für Strahltriebwerke nach einem der Ansprüche 4 bis 7, die außerdem dadurch gekennzeichnet ist, daß die selektiv zu betätigende Verschiebungseinrichtung (30; 15, Fig. 11) mit jeder Klappe (3, 4) so verbunden ist, daß die Betätigung der Verschiebungseinrichtung alle Klappen (3,4) gleichzeitig und im gleichen Ausmaß verschiebt.

9. Schubumkehrvorrichtung für Strahltriebwerke nach einem der Ansprüche 3 bis 8, die außerdem dadurch gekennzeichnet ist, daß die Verschiebung der Klappen (3, 4), um den Querschnitt (S; S1) der Düsenverlängerung zu verändern, während sie sich im Ruhezustand befinden, durch das Verschieben der Drehachsen (6, 7) der Klappen bewirkt wird.

10. Schubumkehrvorrichtung für Strahltriebwerke nach Anspruch 9, die außerdem dadurch gekennzeichnet ist, daß die Drehachsen (6, 7) der Klappen (3, 4) durch die drehbaren Elemente (39, 44) getragen werden; daß die Drehachsen (40, 45) der Elemente (39, 44) einen Abstand von den Drehachsen (6, 7) der Klappen (3, 4) aufweisen; und daß die Verschiebung der Klappen (3, 4) im Ruhezustand durch die winkelige Verschiebung der Elemente (39, 44) um ihre Drehachsen (40, 45) bewirkt wird.

11. Schubumkehrvorrichtung für Strahltriebwerke nach Anspruch 9, die außerdem dadurch gekennzeichnet ist, daß die Drehachsen (6, 7) der Klappen (3, 4) auf eine Bewegung längs der bogenförmigen Wege (50, 51), die in der Schubumkehrvorrichtung begrenzt sind, eingeschränkt sind; und daß die Verschiebung der Klappen (3, 4) im Ruhezustand für das Verändern des Querschnittes durch die Bewegung der Drehachsen (6, 7) längs der Wege (50, 51) bewirkt wird.

12. Schubumkehrvorrichtung für Strahltriebwerke nach Anspruch 4 oder 5, die außerdem dadurch gekennzeichnet ist, daß die selektiv zu betätigende Einrichtung (96) für das Verschieben der Klappen (3, 4) in ihrem Ruhezustand mit den Klappen über ein Getriebe (94; 106) verbunden ist.

13. Schubumkehrvorrichtung für Strahltriebwerke nach einem der Ansprüche 3 bis 12, die außerdem dadurch gekennzeichnet ist, daß sich die Drehachsen (6, 7) der Klappen (3, 4) hinten innerhalb der Düsenverlängerung befinden.

14. Schubumkehrvorrichtung für Strahltriebwerke nach einem der Ansprüche 3 bis 13, die außerdem dadurch gekennzeichnet ist, daß die Verriegelungseinrichtung (25-27) für das Einschränken der Verschiebung der Klappen (3, 4) quer zur Düsenachse, während die Klappen (3, 4) im Ruhezustand sind, in Richtung des vorderen Endes der Düsenverlängerung angeordnet ist; und daß die Verriegelungseinrichtung (25-27) die Bewegung der Klappen (3, 4) in der Längsrichtung der Düsenachse während der Verschiebung der Klappen (3, 4) ermöglicht, während sie sich im Ruhezustand befinden.

15. Schubumkehrvorrichtung für Strahltriebwerke nach Anspruch 1, die außerdem aufweist:
(a) die Betätigungseinrichtung (14) der Schubumkehrvorrichtung für das Betätigen der einen oder mehreren Klappen (3, 4) zwischen dem entsprechenden Ruhezustand und Betriebszustand;
(b) die Einrichtung (25) für das Halten der einen oder mehreren Klappen (3, 4) im Ruhezustand;
(c) eine weitere Betätigungseinrichtung (30) für das selektive Bewegen der einen oder mehreren Klappen (3, 4), während sie sich im Ruhezustand befinden, zwischen der ersten und der zweiten Grenzposition; und
(d) die Einrichtung (26, 27), die eine ausreichende Bewegung der einen oder mehreren Klappen (3, 4) relativ zu der damit verbundenen Einrichtung (25) für das Halten der Klappen ermöglicht, um die Betätigung der einen oder mehreren Klappen (3, 4) zwischen der ersten und der zweiten Grenzposition zu gestatten.

16. Schubumkehrvorrichtung für Strahltriebwerke nach Anspruch 15, bei der die weitere Betätigungseinrichtung (30) die hintersten Abschnitte der einen oder mehreren Klappen (3, 4), während sie sich in den Ruhepositionen während des Fluges befinden, voneinander weg und zueinander hin bewegt, um dadurch die Querschnittsfläche der Verengung der Strahldüse des Triebwerkes zu verändern.

17. Schubumkehrvorrichtung für Strahltriebwerke nach Anspruch 16, bei der zwei Klappen (3, 4) vorgesehen sind, und wobei jede Klappe drehbar auf einem Drehelement (11, 12) getragen wird, um dadurch zu ermöglichen, daß die Klappen zwischen der Schubumkehrbetriebs- und der Ruheposition gedreht werden; und bei der eine weitere Betätigungseinrichtung (30) das Drehelement (11, 12) für jede Klappe bewegt, um dadurch selektiv eine jede Klappe von der gegenüberliegenden Klappe an ihrem hintersten Ende weg und zu dieser hin zu bewegen, um somit die Querschnittsfläche der Verengung der Strahldüse, die durch die Klappen gebildet wird, zu vergrößern und bzw. zu verkleinern.

18. Schubumkehrvorrichtung für Strahltriebwerke nach Anspruch 15, bei der die weitere Betätigungseinrichtung (30) aufweist:
eine Exzentereinrichtung (39, 44), die mit den Klappen (3, 4) an deren entsprechenden Drehelementen (11, 12) verbunden ist;
mindestens einen Betätigungshebel (36, 37) der mit jeder Exzentereinrichtung (39, 44) an einer Stelle verbunden ist, die zum entsprechenden Drehelement (11, 12) außermittig ist, um der Exzentereinrichtung (39, 44) eine Bewegung zu erteilen;
wodurch die Exzentereinrichtungen (39. 44), wenn sie durch die Betätigungshebel (36, 37) auf eine Bewegung eingestellt sind, selektiv die Klappen (3, 4) winkelig um die entsprechenden Drehelemente (11, 12) herum bewegen.

19. Schubumkehrvorrichtung für Strahltriebwerke nach Anspruch 15, bei der die weitere Betätigungseinrichtung (30) aufweist:
eine Platte mit einer Vielzahl von bogenförmigen Schlitzen (50, 51), die jeweils für das Bewirken einer Führung der Bewegung der entsprechenden Klappe (3, 4), die damit mittels eines Betätigungshebels (36, 37) verbunden ist, vorhanden sind.

20. Schubumkehrvorrichtung für Strahltriebwerke nach Anspruch 15, bei der die weitere Betätigungseinrichtung (30) einen Hydraulikkolben (34) aufweist.

21. Schubumkehrvorrichtung für Strahltriebwerke nach Anspruch 15, bei der die Betätigungseinrichtung für die Schubumkehrvorrichtung einen Hydraulikkolben (15) aufweist.

22. Schubumkehrvorrichtung für Strahltriebwerke nach Anspruch 17, bei der die weitere Betätigungseinrichtung (30) mindestens einen Ring (39, 44) aufweist, der drehbar montiert ist, um sich in einem Flansch (41), der mit dem Triebwerk verbunden ist, zu drehen, wobei auf jedem Ring (39, 44) außermittig und parallel zu seiner Drehachse auf einer Seite der stromabwärts gelegenen Querachse der Düse eine Spindel (38, 43) angeordnet ist, um die eine Verbindungsstange (35, 36, 37) herum unter der Wirkung der Antriebseinrichtung (34) bewegt wird, um durch die Drehung der Stange die Querschnittsfläche der Verengung der Strahldüse zu verändern, wenn die Klappen (3, 4) in der Ruhe- und Festhalteposition sind.

23. Schubumkehrvorrichtung für Strahltriebwerke nach Anspruch 19, bei der die Platte (41), die die bogenförmigen Schlitze (50, 51) enthält, mit dem Triebwerk verbunden ist, wobei die Schlitze (50, 51) um eine stromabwärts gelegene Querachse der Düse mittels der entsprechenden Steuerungsstangen (36, 37) unter der Wirkung einer Antriebseinrichtung verschiebbar sind, um die Querschnittsfläche der Verengung der Strahldüse zu verändern, während sich die Klappen (3, 4) in der Ruhe- und Festhalteposition befinden.

24. Schubumkehrvorrichtung für Strahltriebwerke nach Anspruch 21, bei der der Kolben (15) aufweist:
einen stationären Abschnitt (15), der mit dem Triebwerk verbunden ist;
einen beweglichen Abschnitt, der Flansche umfaßt, von denen ein jeder mit einem Ende der entsprechenden starren Stangen (53, 54) verbunden ist, wobei das andere Ende einer jeden starren Stange (53, 54) mit einer entsprechenden Klappe (3, 4) in der Nähe des Abschnittes der Klappen (3, 4), die den stromabwärts gelegenen Abschnitt der Düse bilden, verbunden ist, und wobei eine jede starre Stange (53, 54) teleskopisch entweder eine minimale Länge oder eine maximale Länge in Abhängigkeit von der Funktion des Kolbens (15) in Besitz nimmt, wobei die Klappen (3. 4) in der Ruheposition gehalten werden.

25. Schubumkehrvorrichtung für Strahltriebwerke nach Anspruch 24, bei der die weitere Betätigungseinrichtung aufweist:
zwei Verbindungsstangenbaugruppen (58, 59), von denen eine jede eine Vielzahl von Stangen (60, 61, 62 und 63, 64, 65) umfaßt, die die entsprechenden ersten Enden, die mit einer Achse (67, 70) verbunden sind, und die entsprechenden zweiten Enden besitzen, die mit einer teleskopischen Stange (53, 54), mit einer Gelenkspindel. die mit der Klappe (22, 23) verbunden ist, und mit einem Ring (40, 44), der drehbar montiert ist, um sich in einem Flansch (41) zu drehen, der mit dem Triebwerk verbunden ist, verbunden sind, wobei auf dem Ring (40, 44) außermittig und parallel zu seiner Drehachse auf einer Seite die Gelenkspindel der entsprechenden Stange (38, 43) und auf der anderen Seite die entsprechende Klappe (3, 4) der Schubumkehrvorrichtung angeordnet ist.

26. Schubumkehrvorrichtung für Strahltriebwerke nach Anspruch 25, bei der der Ring (40, 44) einer jeden Baugruppe in einem entsprechenden stromabwärts gelegenen Ende der einen der Klappen (3, 4) angeordnet ist.

## Revendications

1. Inverseur de poussée pour moteur à réaction du type dans lequel un ou plusieurs volet(s) (3, 4) qui sont mobiles depuis une position de repos jusqu'à une position déployée pour l'inversion de poussée du moteur forment une extension de tuyère (32) pour le moteur en position de repos et peuvent se déplacer tout en restant en position de repos; ledit ou lesdits volet(s) (3, 4) étant monté(s) à pivot afin de se déplacer entre la position de repos et la position déployée, l'axe de pivot (6, 7) dudit ou de chacun desdits volet(s) (3, 4) étant situé vers l'extrémité aval dudit ou desdits (volet(s) en position de repos; caractérisé en ce que, en position de repos, le ou les volet(s) (3, 4) forment au moins une partie de l'étranglement de la tuyère d'éjection du moteur, et le déplacement du ou des volet(s) (3, 4) en position de repos entre une première et une deuxième position limite modifie la surface de la section transversale de l'étranglement de ladite tuyère d'éjection entre des valeurs minimales et maximales correspondantes (S, S1).

2. Inverseur de poussée pour moteur à réaction selon la revendication 1, caractérisé en outre en ce que le ou les volet(s) (3, 4) peuvent se déplacer entre plusieurs positions distinctes lorsqu'ils sont en position de repos.

3. Inverseur de poussée pour moteur à réaction selon la revendication 1 ou la revendication 2, caractérisé en outre en ce qu'il comprend plusieurs desdits volets (3,4).

4. Inverseur de poussée pour moteur à réaction selon la revendication 3, caractérisé en outre en ce qu'un moyen actionnable sélectivement (30) pour déplacer les volets (3, 4) dans la position de repos est séparé d'un moyen sélectivement actionnable (14) pour les amener dans leur position déployée.

5. Inverseur de poussée pour moteur à réaction selon la revendication 3, caractérisé en outre en ce que le moyen actionnable sélectivement (15, figure 11) pour amener les volets dans leur position de repos est également actionnable sélectivement pour les amener dans leur position déployée.

6. Inverseur de poussée pour moteur à réaction selon la revendication 4 ou la revendication 5, caractérisé en outre en ce que le moyen pour amener les volets dans leur position de repos est couplé aux volets (3, 4) par des liaisons (36, 37; 53. 54; 74, 76) et que les liaisons exercent des moments de rotation sur les volets (3, 4) en fonction de l'actionnement des moyens de déplacement (30; 15, figure 11).

7. Inverseur de poussée pour moteur à réaction selon la revendication 6, caractérisé en outre en ce que les liaisons (53, 54) ont des longueurs variables en fonction du fait que les volets (3, 4) sont bloqués en position de repos.

8. Inverseur de poussée pour moteur à réaction selon l'une quelconque des revendications 4 à 7, caractérisé en outre en ce que le moyen de déplacement actionnable sélectivement (30; 15, figure 11) est couplé à chaque volet (3, 4), de façon que l'actionnement du moyen de déplacement déplace tous les volets (3, 4) simultanément et dans la même mesure.

9. Inverseur de poussée pour moteur à réaction selon l'une quelconque des revendications 3 à 8, caractérisé en outre en ce que le déplacement des volets (3, 4) pour modifier la section transversale (S; S1) de l'extension de tuyère alors qu'ils sont en position de repos est effectué en déplaçant les axes de pivot (6, 7) des volets.

10. Inverseur de poussée pour moteur à réaction selon la revendication 9. caractérisé en outre en ce que les axes de pivot (6, 7) des volets (3, 4) sont supportés par des éléments pivotants (39, 44), en ce que les axes de pivot (40, 45) desdits éléments (39, 44) sont espacés par rapport aux axes de pivot (6, 7) des volets (3, 4), et en ce que le déplacement des volets (3, 4) en position de repos est effectué par un déplacement angulaire desdits éléments (39, 44) autour de leurs axes de pivot (40, 45).

11. Inverseur de poussée pour moteur à réaction selon la revendication 9, caractérisé en outre en ce que les axes de pivot (6, 7) des volets (3, 4) sont obligés de se déplacer le long de trajets incurvés (50, 51) définis dans l'inverseur et en ce que le déplacement des volets (3, 4) en position de repos pour modifier ladite section transversale est effectué en déplaçant les axes de pivot (6, 7) le long desdits trajets (50, 51).

12. Inverseur de poussée pour moteur à réaction selon la revendication 4 ou la revendication 5, caractérisé en outre en ce que le moyen actionnable sélectivement (96) pour déplacer les volets (3, 4) dans leur position de repos est couplé aux volets par un engrenage (94; 106).

13. Inverseur de poussée pour moteur à réaction selon l'une quelconque des revendications 3 à 12, caractérisé en outre en ce que les axes de pivot (6, 7) des volets (3, 4) sont situés en arrière dans l'extension de tuyère.

14. Inverseur de poussée pour moteur à réaction selon l'une quelconque des revendications 3 à 13, caractérisé en outre en ce que le moyen de blocage (25-27) pour restreindre le déplacement des volets (3, 4) transversalement par rapport à l'axe de tuyère alors que les volets (3, 4) sont en position de repos est situé vers l'extrémité avant de l'extension de tuyère, et en ce que le moyen de blocage (25-27) permet le mouvement des volets (3, 4) longitudinalement par rapport à l'axe de tuyère pendant le déplacement des volets (3, 4) lorsque ceux-ci sont en position de repos.

15. Inverseur de poussée pour moteur à réaction selon la revendication 1 comprenant en outre:
(a) un actionneur d'inverseur de poussée (14) pour faire fonctionner le ou les volet(s) (3, 4) entre les positions correspondantes de repos et déployées;
(b) moyen (25) pour maintenir le ou les volet(s) (3, 4) en position de repos;
(c) un actionneur supplémentaire (30) pour déplacer sélectivement ledit ou lesdits volet(s) (3, 4) en position de repos entre les première et deuxième positions limites; et
(d) un moyen (26, 27) permettant un mouvement suffisant dudit ou desdits volet(s) (3, 4) par rapport au moyen de retenue de volet correspondant (25) pour permettre l'actionnement dudit ou desdits volet(s) (3, 4) entre les première et deuxième positions limites.

16. Inverseur de poussée pour moteur à réaction selon la revendication 15, dans lequel ledit actionneur supplémentaire (30) déplace la partie la plus en arrière dudit ou desdits volet(s) (3, 4) lorsqu'ils sont en position de repos en vol, en s'écartant les uns des autres et les uns vers les autres de manière à modifier ainsi la surface de la section transversale de l'étranglement de la tuyère d'éjection du moteur.

17. Inverseur de poussée pour moteur à réaction selon la revendication 16, dans lequel deux volets (3, 4) sont prévus et chaque volet est supporté à pivot sur un élément de pivot (11, 12) pour permettre ainsi que lesdits volets pivotent entre une position déployée inversant la poussée et une position de repos, et ledit actionneur supplémentaire (30) déplace ledit élément de pivot (11, 12) pour chacun desdits volets, de manière à déplacer sélectivement chacun desdits volets en s'écartant du volet opposé et en se rapprochant de celui-ci à son extrémité la plus en arrière de manière à augmenter et à diminuer respectivement la surface de la section transversale de l'étranglement de ladite tuyère d'éjection formée par lesdits volets.

18. Inverseur de poussée pour moteur à réaction selon la revendication 15, dans lequel ledit actionneur supplémentaire (30) comprend:
un moyen à excentrique (39, 44) couplé aux volets (3, 4) par les éléments à pivot correspondants (11, 12) de ceux-ci;
au moins un bras d'actionnement (36, 37) connecté à chacun des moyens à excentrique (39, 44) à un endroit ex-centré par rapport à l'élément de pivot correspondant (11, 12) pour conférer un mouvement au moyen à excentrique (39, 44);
dans lequel les moyens à excentrique (39, 44), lorsqu'ils sont mis en mouvement par les bras d'actionnement (36, 37), déplacent sélectivement les volets (3, 4) angulairement autour des éléments de pivot correspondants (11, 12).

19. Inverseur de poussée pour moteur à réaction selon la revendication 15, dans lequel ledit actionneur supplémentaire (30) comprend :
une plaque ayant plusieurs fentes incurvées (50, 51) assurant chacune le guidage du déplacement d'un volet correspondant (3, 4) couplé par celle-ci à un bras d'actionnement (36, 37).

20. Inverseur de poussée pour moteur à réaction selon la revendication 15, dans lequel ledit actionneur supplémentaire (30) comprend un vérin hydraulique (34).

21. Inverseur de poussée pour moteur à réaction selon la revendication 15, dans lequel ledit actionneur d'inverseur de poussée comprend un vérin hydraulique (15).

22. Inverseur de poussée pour moteur à réaction selon la revendication 17, dans lequel ledit actionneur supplémentaire (30) comprend au moins une bague (39, 44) montée à pivot afin de tourner dans une bride (41) connectée audit moteur, chaque bague (39, 44) étant positionnée de manière excentrée et parallèle à son axe de rotation sur un côté de l'axe transversal aval de ladite tuyère, une broche (38, 43) autour de laquelle se déplace une tige de connexion (35, 36, 37) sous l'action d'un moyen de commande (34) afin de modifier, par la rotation de ladite tige, la surface de la section transversale de l'étranglement de ladite tuyère d'éjection lorsque lesdits volets (3, 4) sont en position de repos et de retenue.

23. Inverseur de poussée pour moteur à réaction selon la revendication 19, dans lequel ladite plaque (41) contenant lesdites fentes incurvées (50, 51) est connectée audit moteur, les fentes (50, 51) pouvant coulisser autour d'un axe transversal aval de ladite tuyère au moyen de tiges de commande correspondantes (36, 37) sous l'effet d'un moyen de commande pour modifier la surface de la section transversale de l'étranglement de la tuyère d'éjection lorsque lesdits volets (3, 4) sont en position de repos et de retenue.

24. Inverseur de poussée pour moteur à réaction selon la revendication 17, dans lequel le vérin (15) comprend :
une partie fixe (15) connectée audit moteur;
une partie mobile comprenant des brides dont chacune est couplée à une extrémité de tiges rigides correspondantes (53, 54), l'autre extrémité de chacune des tiges rigides (53, 54) étant connectée à un volet correspondant (3, 4) à proximité de la partie des volets (3, 4) formant la partie aval de ladite tuyère, chacune desdites tiges rigides (53, 54) occupant téléscopiquement, soit une longueur minimale, soit une longueur maximale, en fonction du fonctionnement dudit vérin (15) avec lesdits volets (3, 4) maintenus en position de repos.

25. Inverseur de poussée pour moteur à réaction selon la revendication 24, dans lequel ledit actionneur supplémentaire comprend :
deux ensembles de tiges de connexion (58, 59) comprenant chacune plusieurs tiges (60, 61, 62 et 63, 64, 65) ayant des premières extrémités correspondantes couplées à un axe (67, 70) et des deuxièmes extrémités correspondantes couplées à une tige téléscopique (53, 54) à une broche de charnière connectée auxdits volets (22, 23) et à une bague (40, 44) montée à pivot afin de tourner dans une bride (41) connectée audit moteur, ladite bague (40, 44) étant positionnée de manière excentrée et parallèlement à son axe de rotation sur un côté, ladite broche de charnière de la tige correspondante (38, 43) et, de l'autre côté, le volet correspondant d'inversion de poussée (3, 4).

26. Inverseur de poussée pour moteur à réaction selon la revendication 25, dans lequel ladite bague (40, 44) de chacun des ensembles est disposée à une extrémité aval correspondante de l'un desdits volets (3, 4).
